(19) **Europäisches Patentamt**
**European Patent Office**
**Office européen des brevets**

(11) **EP 3 626 687 A1**

(12) **EUROPEAN PATENT APPLICATION**
published in accordance with Art. 153(4) EPC

(43) Date of publication:
**25.03.2020 Bulletin 2020/13**

(51) Int Cl.:
**C03C 3/247** (2006.01)   **G02B 1/00** (2006.01)

(21) Application number: **18802627.2**

(22) Date of filing: **10.04.2018**

(86) International application number:
**PCT/JP2018/015004**

(87) International publication number:
**WO 2018/211861 (22.11.2018 Gazette 2018/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2017 JP 2017099128**

(71) Applicant: **Ohara Inc.**
**Chuo-ku**
**Sagamihara-shi**
**Kanagawa 252-5286 (JP)**

(72) Inventor: **OGINO Michiko**
**Sagamihara-Shi**
**Kanagawa 252-5286 (JP)**

(74) Representative: **SSM Sandmair**
**Patentanwälte Rechtsanwalt**
**Partnerschaft mbB**
**Joseph-Wild-Straße 20**
**81829 München (DE)**

(54) **OPTICAL GLASS, OPTICAL ELEMENT, AND PREFORM**

(57)     There are provided an optical glass that can compensate for chromatic aberration of glass lenses with high precision because of its high anomalous dispersion, that is lighter than that in the related art, and that is easily handled in a polishing process because of its low degree of abrasion, an optical element, and a preform.
The optical glass contains $P^{5+}$, $Al^{3+}$, and $Zn^{2+}$ as cation components and $O^{2-}$ and $F^-$ as anion components, wherein the cation components are $P^{5+}$ 25% to 40%, $Al^{3+}$ 5% to 20%, $Zn^{2+}$ 1% to 15%, and $Ba^{2+}$ 0% to 28% on a cat.% basis,
the anion components are $O^{2-}$ 40% to 70% and $F^-$ 30% to 60% on an ani.% basis, and
the optical glass has a refractive index (nd) of 1.53 to 1.60, an Abbe number (vd) of 65 to 75, a partial dispersion ratio $\theta$g.f of 0.520 to 0.560, and a degree of abrasion of 420 or less.

EP 3 626 687 A1

**Description**

Technical Field

The present invention relates to an optical glass, an optical element, and a preform.

Background Art

The lens system of optical apparatuses is normally designed by combining a plurality of glass lenses having different optical properties. In recent years, various characteristics have been required for the lens system of optical apparatuses, and optical glasses having optical properties that have not received attention have been developed to further extend the flexibility in design. In particular, optical glasses having a distinctive anomalous dispersion ($\Delta\theta$g,F) have received attention because of their considerable effect of compensating for chromatic aberration.

For example, PTL 1 proposes an optical glass having a high anomalous dispersion in addition to high refractive index, low dispersion, and good workability, which have been required in the related art. The optical glass contains, for example, $P^{5+}$, $Al^{3+}$, and alkaline-earth metal ions as cation components and $F^-$ and $O^{2-}$ as anion components.

Citation List

Patent Literature

PTL 1: Japanese Unexamined Patent Application Publication No. 2013-163632
PTL 2: Japanese Unexamined Patent Application Publication No. 2015-205785

Summary of Invention

Technical Problem

However, the optical glass in the related art disclosed in PTL 1 has a low degree of abrasion and thus has poor workability. That is, the development of an optical glass having good workability while a high anomalous dispersion is maintained has been desired.

The optical glass in the related art disclosed in PTL 2 has an improved degree of abrasion, but contains a large amount of Ba component. Therefore, the optical glass has a high specific gravity and is not suitable for lens units required to have a light weight.

It is an object of the present invention to solve the above problem.

That is, it is an object of the present invention to provide an optical glass that can compensate for chromatic aberration of glass lenses with high precision because of its high anomalous dispersion, that is lighter than that in the related art, and that is easily handled in a polishing process because of its low degree of abrasion, and to provide an optical element and a preform.

It is another object of the present invention to provide an optical glass that can be used for the optical system in which, for example, the image formation characteristics are not easily affected by temperature change so that the optical glass can be used as an optical element incorporated into onboard optical apparatuses such as onboard cameras or an optical element incorporated into optical apparatuses that generate a large amount of heat, such as projectors, copying machines, laser printers, and broadcasting equipment.

Solution to Problem

As a result of thorough studies conducted to solve the above problem, the present inventors have completed the present invention.

The present invention are (1) to (3) below.

An optical glass contains $P^{5+}$, $Al^{3+}$, and $Zn^{2+}$ as cation components and $O^{2-}$ and $F^-$ as anion components, wherein the cation components are $P^{5+}$ 25% to 40%, $Al^{3+}$ 5% to 20%, $Zn^{2+}$ 1% to 15%, and $Ba^{2+}$ 0% to 28% on a cat.% basis, the anion components are $O^{2-}$ 40% to 70% and $F^-$ 30% to 60% on an ani.% basis, and

the optical glass has a refractive index (nd) of 1.53 to 1.60, an Abbe number (vd) of 65 to 75, and a degree of abrasion of 420 or less.

(2) In the optical glass according to (1), a temperature coefficient (40°C to 60°C) of a relative refractive index (546.07 nm) is in a range of +2.0 $\times$ 10$^{-6}$ to -5.5 $\times$ 10$^{-6}$ (°C$^{-1}$).

(3) An optical element is formed of the optical glass according to (1) or (2).

Advantageous Effects of Invention

The present invention can provide an optical glass that can compensate for chromatic aberration of glass lenses with high precision because of its high anomalous dispersion, that is lighter than that in the related art, and that is easily handled in a polishing process because of its low degree of abrasion. The present invention can also provide an optical glass that can be used for the optical system in which, for example, the image formation characteristics are not easily affected by temperature change.

Description of Embodiments

The present invention will be described.

The present invention provides an optical glass containing P$^{5+}$, Al$^{3+}$, and Zn$^{2+}$ as cation components and O$^{2-}$ and F$^{-}$ as anion components.

The cation components are P$^{5+}$ 25% to 40%, Al$^{3+}$ 5% to 20%, and Zn$^{2+}$ 1% to 15% on a cat.% basis and the anion components are O$^{2-}$ 40% to 70% and F$^{-}$ 30% to 60% on an ani.% basis.

The optical glass has a refractive index (nd) of 1.53 to 1.60, an Abbe number (vd) of 65 to 75, and a degree of abrasion of 420 or less.

Such an optical glass is hereafter referred to as an "optical glass of the present invention".

<Glass component>

Each component constituting the optical glass of the present invention will be described.

In this specification, the content of each component is expressed in units of cat.% or ani.% based on molar ratio unless otherwise specified. Herein, "cat.%" and "ani.%" each refer to the content of each component in the glass obtained when glass components of the optical glass of the present invention are separated into cation components and anion components and the total content of each of the cation components and the anion components is assumed to be 100 mol%.

The ionic valence of each component is a representative valence for the sake of convenience and is not intended to be distinguished from other ionic valences. The ionic valence of each component present in the optical glass may be a valence other than the representative valence. For example, P is normally present in glass with an ionic valence of 5 and is therefore expressed as "P$^{5+}$" in this specification. However, P may be present with another ionic valence. Even if components are present with other ionic valences to be precise, each of the components is treated as being present in the optical glass with a representative ionic valence in this specification.

[Cation component]

<P$^{5+}$>

The optical glass of the present invention contains P$^{5+}$. P$^{5+}$ is a glass-forming component and has characteristics of suppressing the devitrification of the glass and improving the refractive index.

To enhance such characteristics, the content of P$^{5+}$ is preferably 25.0% to 40.0%. The content is more preferably 26.0% or more and further preferably 28.0% or more. The content is more preferably 40.0% or less, further preferably 38.0% or less, and still further preferably 37.0% or less.

P$^{5+}$ can be incorporated into the glass by using raw materials such as Al(PO$_3$)$_3$, Ca(PO$_3$)$_2$, Ba(PO$_3$)$_2$, Zn(PO$_3$)$_2$, BPO$_4$, and H$_3$PO$_4$.

<Al$^{3+}$>

The optical glass of the present invention contains Al$^{3+}$. Al$^{3+}$ has characteristics of improving the devitrification resistance of the glass and decreasing the degree of abrasion.

To enhance such characteristics, the content of Al$^{3+}$ is preferably 5.0% to 20.0%. The content is more preferably 7.0% or more, further preferably 8.0% or more, and still further preferably 10.0 or more. The content is more preferably 19.0% or less and further preferably 17.0% or less.

Al$^{3+}$ can be incorporated into the glass by using raw materials such as Al(PO$_3$)$_3$, AlF$_3$, and Al$_2$O$_3$.

$Zn^{2+}$ has characteristics of holding the degree of abrasion of the glass at a value required in the present invention and improving the devitrification resistance. However, if the content is excessively high, the degree of abrasion of the glass deteriorates, which decreases the refractive index.

The content of $Zn^{2+}$ is preferably 1.0% to 18.0%. The content is more preferably 2.0% or more, further preferably 3.0% or more, and still further preferably 16.0 or more. The content is more preferably 15.0% or less.

<Alkaline-earth metal>

In the optical glass of the present invention, alkaline-earth metals refer to $Mg^{2+}$, $Ca^{2+}$, $Sr^{2+}$, and $Ba^{2+}$. At least one selected from the group consisting of $Mg^{2+}$, $Ca^{2+}$, $Sr^{2+}$, and $Ba^{2+}$ may be represented by $R^{2+}$.

The total content of $R^{2+}$ refers to a total content of the four ions $(Mg^{2+} + Ca^{2+} + Sr^{2+} + Ba^{2+})$.

The total content of $R^{2+}$ is preferably 20.0% to 55.0%. When the total content is in the above range, a more stable glass can be obtained.

The total content of $R^{2+}$ is more preferably 27.0% or more and further preferably 29.0% or more. The total content is more preferably 55.0% or less, further preferably 53.0% or less, and still further preferably 50.0% or less.

<$Mg^{2+}$>

The optical glass of the present invention contains $Mg^{2+}$. $Mg^{2+}$ has characteristics of improving the devitrification resistance of the glass and decreasing the degree of abrasion.

To enhance such characteristics, the content of $Mg^{2+}$ is preferably 0.0% to 20.0%. The content is more preferably 1.0% or more and further preferably 2.0% or more. The content is more preferably 18.0% or less and further preferably 15.0% or less.

$Mg^{2+}$ can be incorporated into the glass by using raw materials such as $MgO$ and $MgF_2$.

<$Ca^{2+}$>

The optical glass of the present invention preferably contains $Ca^{2+}$. $Ca^{2+}$ has characteristics of improving the devitrification resistance, suppressing a decrease in refractive index, and decreasing the degree of abrasion of the glass.

To enhance such characteristics, the content of $Ca^{2+}$ is preferably 0.0% to 25.0%. The content is more preferably 2.0% or more and further preferably 3.0% or more. The content is more preferably 23.0% or less and further preferably 20.0% or less.

$Ca^{2+}$ can be incorporated into the glass by using raw materials such as $Ca(PO_3)_2$, $CaCO_3$, and $CaF_2$.

<$Sr^{2+}$>

The optical glass of the present invention may contain $Sr^{2+}$ as one of $R^{2+}$ (alkaline-earth metals) . $Sr^{2+}$ has characteristics of improving the devitrification resistance of the glass and suppressing a decrease in refractive index.

To enhance such characteristics, the content of $Sr^{2+}$ is preferably 0% to 20.0%. The content is more preferably 1.0% or more and further preferably 2.0% or more. The content is more preferably 18.0% or less and further preferably 16.0% or less.

$Sr^{2+}$ can be incorporated into the glass by using raw materials such as $Sr(NO_3)_2$ and $SrF_2$.

<$Ba^{2+}$>

The optical glass of the present invention may contain $Ba^{2+}$ as one of $R^{2+}$ (alkaline-earth metals) . $Ba^{2+}$ has characteristics of improving the devitrification resistance of the glass when a predetermined amount of $Ba^{2+}$ is contained. $Ba^{2+}$ also has characteristics of maintaining low dispersion and increasing the refractive index. However, if the content is excessively high, the specific gravity excessively increases, which may make it difficult to use the optical glass as a part of a lens unit.

To enhance such characteristics, the content of $Ba^{2+}$ is preferably 0% to 30.0%. The content is preferably 1.0% or more and more preferably 3.0% or more. The content is more preferably 28.0% or less and further preferably 23.0% or less. $Ba^{2+}$ can be incorporated into the glass by using raw materials such as $Ba(PO_3)_2$, $BaCO_3$, $Ba(NO_3)_2$, and $BaF_2$.

<$Ln^{3+}$>

In the present invention, $Ln^{3+}$ refers to at least one selected from the group consisting of $Y^{3+}$, $La^{3+}$, $Gd^{3+}$, $Yb^{3+}$, and $Lu^{3+}$. The total content of $Ln^{3+}$ refers to a total content of the five ions $(Y^{3+} + La^{3+} + Gd^{3+} + Yb^{3+} + Lu^{3+})$.

The optical glass of the present invention preferably contains $Ln^{3+}$ in a total content of 10.0% or less. When the total content is in the above range, the refractive index of the glass tends to increase and low dispersion tends to be achieved. The total content is preferably 9.0% or less, more preferably 8.0% or less, and further preferably 7.0% or less. Since $Ln^{3+}$ is an optional component, the optical glass of the present invention does not necessarily contain $Ln^{3+}$.

$<Y^{3+}>$

The optical glass of the present invention may contain $Y^{3+}$ as one of $Ln^{3+}$. $Y^{3+}$ has characteristics of maintaining low dispersion, increasing the refractive index, and improving the devitrification resistance. However, if the content is excessively high, the stability tends to deteriorate. Therefore, the content is more preferably 10.0% or less, further preferably 8.0% or less, and still further preferably 7.0% or less. Furthermore, the glass of the present invention can be obtained without $Y^{3+}$. In this regard, $Y^{3+}$ is not necessarily contained.
$Y^{3+}$ can be incorporated into the glass by using raw materials such as $Y_2O_3$ and $YF_3$.

$<La^{3+}>$

The optical glass of the present invention may contain $La^{3+}$ as one of $Ln^{3+}$. $La^{3+}$ has characteristics of maintaining low dispersion and increasing the refractive index.
To enhance such characteristics, the content of $La^{3+}$ is more preferably 10.0% or less, further preferably 8.0% or less, and still further preferably 7.0% or less.
$La^{3+}$ can be incorporated into the glass by using raw materials such as $La_2O_3$ and $LaF_3$.

$<Gd^{3+}>$

The optical glass of the present invention may contain $Gd^{3+}$ as one of $Ln^{3+}$. $Gd^{3+}$ has characteristics of maintaining low dispersion, increasing the refractive index, and improving the devitrification resistance.
To enhance such characteristics, the content of $Gd^{3+}$ is more preferably 10.0% or less, further preferably 8.0% or less, and still further preferably 7.0% or less.
$Gd^{3+}$ can be incorporated into the glass by using raw materials such as $Gd_2O_3$ and $GdF_3$.

$<Yb^{3+}>$

The optical glass of the present invention may contain $Yb^{3+}$ as one of $Ln^{3+}$. $Yb^{3+}$ has characteristics of maintaining low dispersion, increasing the refractive index, and improving the devitrification resistance.
To enhance such characteristics, the content of $Yb^{3+}$ is more preferably 10.0% or less, further preferably 8.0% or less, and still further preferably 7.0% or less.
$Yb^{3+}$ can be incorporated into the glass by using raw materials such as $Yb_2O_3$.

$<Lu^{3+}>$

The optical glass of the present invention may contain $Lu^{3+}$ as one of $Ln^{3+}$. $Lu^{3+}$ has characteristics of maintaining low dispersion, increasing the refractive index, and improving the devitrification resistance.
To enhance such characteristics, the content of $Lu^{3+}$ is more preferably 9.0% or less, further preferably 8.0% or less, and still further preferably 7.0% or less.
$Lu^{3+}$ can be incorporated into the glass by using raw materials such as $Lu_2O_3$.

$<Si^{4+}>$

The optical glass of the present invention may contain $Si^{4+}$ as an optional component. $Si^{4+}$ has characteristics of improving the devitrification resistance of the glass when a predetermined amount of $Si^{4+}$ is contained, increasing the refractive index, and decreasing the degree of abrasion.
To enhance such characteristics, the content of $Si^{4+}$ is preferably 10.0% or less, more preferably 8.0% or less, and further preferably 5.0% or less.
$Si^{4+}$ can be incorporated into the glass by using raw materials such as $SiO_2$, $K_2SiF_6$, and $Na_2SiF_6$.

$<B^{3+}>$

The optical glass of the present invention may contain $B^{3+}$ as an optional component. $B^{3+}$ has characteristics

of improving the devitrification resistance of the glass when a predetermined amount of $B^{3+}$ is contained, increasing the refractive index, decreasing the degree of abrasion, and suppressing the deterioration of chemical resistance.

To enhance such characteristics, the content of $B^{3+}$ is preferably 10.0% or less, more preferably 8.0% or less, and further preferably 5.0% or less. $B^{3+}$ can be incorporated into the glass by using raw materials such as $H_3BO_3$, $Na_2B_4O_7$, and $BPO_4$.

<Li$^+$>

The optical glass of the present invention may contain $Li^+$ as an optional component. $Li^+$ has characteristics of maintaining the devitrification resistance during formation of the glass and decreasing the glass transition temperature (Tg).

To enhance such characteristics, the content of $Li^+$ is preferably 10.0% or less, more preferably 5.0% or less, and further preferably 1.0% or less.

$Li^+$ can be incorporated into the glass by using raw materials such as $Li_2CO_3$, $LiNO_3$, and LiF.

<Na$^+$>

The optical glass of the present invention may contain $Na^+$ as an optional component. $Na^+$ has characteristics of maintaining the devitrification resistance during formation of the glass and decreasing the glass transition temperature (Tg).

To enhance such characteristics, the content of $Na^+$ is preferably 10.0% or less, more preferably 9.5% or less, and further preferably 5.0% or less.

$Na^+$ can be incorporated into the glass by using raw materials such as $Na_2CO_3$, $NaNO_3$, NaF, and $Na_2SiF_6$.

<K$^+$>

The optical glass of the present invention may contain $K^+$ as an optional component. $K^+$ has characteristics of maintaining the devitrification resistance during formation of the glass and decreasing the glass transition temperature (Tg).

To enhance such characteristics, the content of $K^+$ is preferably 10.0% or less, more preferably 8.0% or less, and further preferably 5.0% or less.

$K^+$ can be incorporated into the glass by using raw materials such as $K_2CO_3$, $KNO_3$, KF, $KHF_2$, and $K_2SiF_6$.

<Rn$^+$>

In the optical glass of the present invention, the total content of $Rn^+$ ($Rn^+$ is at least one selected from the group consisting of $Li^+$, $Na^+$, and $K^+$) is preferably 20.0% or less, more preferably 15.0% or less, and further preferably 10.0% or less.

<Nb$^{5+}$>

The optical glass of the present invention may contain $Nb^{5+}$ as an optional component. $Nb^{5+}$ has characteristics of increasing the refractive index of the glass, improving the chemical resistance, and suppressing a decrease in Abbe number.

To enhance such characteristics, the content of $Nb^{5+}$ is preferably 10.0% or less, more preferably 8.0% or less, and further preferably 5.0% or less.

$Nb^{5+}$ can be incorporated into the glass by using raw materials such as $Nb_2O_5$.

<Ti$^{4+}$>

The optical glass of the present invention may contain $Ti^{4+}$ as an optional component. $Ti^{4+}$ has characteristics of increasing the refractive index of the glass.

To enhance such characteristics, the content of $Ti^{4+}$ is preferably 10.0% or less, more preferably 8.0% or less, and further preferably 5.0% or less.

$Ti^{4+}$ can be incorporated into the glass by using raw materials such as $TiO_2$.

<Zr$^{4+}$>

The optical glass of the present invention may contain Zr$^{4+}$ as an optional component. Zr$^{4+}$ has characteristics of increasing the refractive index of the glass.

To enhance such characteristics, the content of Zr$^{4+}$ is preferably 10.0% or less, more preferably 8.0% or less, and further preferably 5.0% or less.

Zr$^{4+}$ can be incorporated into the glass by using raw materials such as ZrO$_2$ and ZrF$_4$.

<Ta$^{5+}$>

The optical glass of the present invention may contain Ta$^{5+}$ as an optional component. Ta$^{5+}$ has characteristics of increasing the refractive index of the glass.

To enhance such characteristics, the content of Ta$^{5+}$ is preferably 10.0% or less, more preferably 8.0% or less, and further preferably 5.0% or less.

Ta$^{5+}$ can be incorporated into the glass by using raw materials such as Ta$_2$O$_5$.

<W$^{6+}$>

The optical glass of the present invention may contain W$^{6+}$ as an optional component. W$^{6+}$ has characteristics of increasing the refractive index of the glass and decreasing the glass transition temperature.

To enhance such characteristics, the content of W$^{6+}$ is preferably 10.0% or less, more preferably 8.0% or less, and further preferably 5.0% or less.

W$^{6+}$ can be incorporated into the glass by using raw materials such as WO$_3$.

<Ge$^{4+}$>

The optical glass of the present invention may contain Ge$^{4+}$ as an optional component. Ge$^{4+}$ has characteristics of increasing the refractive index of the glass and improving the devitrification resistance of the glass.

To make such characteristics remarkable, the content of Ge$^{4+}$ is preferably 10.0% or less, more preferably 8.0% or less, and further preferably 5.0% or less.

Ge$^{4+}$ can be incorporated into the glass by using raw materials such as GeO$_2$.

<Bi$^{3+}$>

The optical glass of the present invention may contain Bi$^{3+}$ as an optional component. Bi$^{3+}$ has characteristics of increasing the refractive index of the glass and decreasing the glass transition temperature.

To enhance such characteristics, the content of Bi$^{3+}$ is preferably 10.0% or less, more preferably 8.0% or less, and further preferably 5.0% or less.

Bi$^{3+}$ can be incorporated into the glass by using raw materials such as Bi$_2$O$_3$.

<Te$^{4+}$>

The optical glass of the present invention may contain Te$^{4+}$ as an optional component. Te$^{4+}$ has characteristics of increasing the refractive index of the glass, decreasing the glass transition temperature, and suppressing coloration.

To enhance such characteristics, the content of Te$^{4+}$ is preferably 15.0% or less, more preferably 10.0% or less, further preferably 8.0% or less, and still further preferably 5.0% or less.

Te$^{4+}$ can be incorporated into the glass by using raw materials such as TeO$_2$.

[Anion component]

<F$^-$>

The optical glass of the present invention contains F$^-$. F$^-$ has characteristics of improving the anomalous dispersion and Abbe number of the glass and suppressing the devitrification of the glass.

To enhance such characteristics, the content of F$^-$ is preferably 30.0% to 60.0% on an ani.% (mol%) basis. The content is more preferably 30.0% or more, further preferably 33.0% or more, and still further preferably 36.0% or more. The content is more preferably 60.0% or less, further preferably 55.0% or less, and still further preferably 50.0% or less.

F⁻ can be incorporated into the glass by using, as raw materials, fluorides of various cation components, such as $AlF_3$, $MgF_2$, and $BaF_2$.

<$O^{2-}$>

The optical glass of the present invention contains $O^{2-}$. $O^{2-}$ has characteristics of suppressing an increase in the degree of abrasion of the glass.

To enhance such characteristics, the content of $O^{2-}$ is preferably 40.0% to 70.0% on an ani.% (mol%) basis. The content is more preferably 40.0% or more, further preferably 45.0% or more, and still further preferably 50.0% or more. The content is more preferably 70.0% or less, further preferably 66.0% or less, and still further preferably 64.0% or less.

The total content of $O^{2-}$ and F⁻ is preferably 98.0% or more, more preferably 99.0% or more, and further preferably 100% on an ani.% basis. This is because a stable glass can be obtained.

$O^{2-}$ can be incorporated into the glass by using, as raw materials, oxides of various cation components, such as $Al_2O_3$, MgO, and BaO, or phosphates of various cation components, such as $Al(PO_3)_3$, $Mg(PO_3)_2$, and $Ba(PO_3)_2$.

Other components may be optionally added to the optical glass of the present invention as long as the characteristics of the glass of the present invention are not impaired.

[Components that should not be contained]

Next, components that should not be contained in the optical glass of the present invention and components that are not preferably contained in the optical glass will be described.

Even if cations of transition metals other than Ti, Zr, Nb, W, La, Gd, Y, Yb, and Lu, such as V, Cr, Mn, Fe, Co, Ni, Cu, Ag, and Mo, are contained alone or in combination in a small amount, the glass is colored and absorbs light having a particular wavelength in the visible range. Therefore, it is preferable that, in particular, an optical glass that uses light having a wavelength in the visible range substantially does not contain the above cations.

In recent years, cations of Pb, Th, Cd, Tl, Os, Be, and Se tend to be not used because they are hazardous chemical substances. Measures for environmental protection need to be taken not only in the glass production process, but also in the working process and in the disposal after production. Therefore, when an importance is given to the influence on environment, it is preferable that the above cations be substantially not contained except for unavoidable mixing. Thus, environmental pollutants are substantially not contained in the optical glass. Therefore, the optical glass can be produced, worked, and disposed of without taking special measures for environmental protection.

Although Sb is useful as an air-release agent, Sb tends to be not contained in optical glasses in recent years because Sb is a component that adversely affects the environment. In this regard, Sb is preferably not contained.

[Production method]

The production method of the optical glass of the present invention is not particularly limited. The optical glass can be produced by, for example, the following method. The above raw materials are uniformly mixed with each other such that the content of each component is in the predetermined range. The mixture is inserted into a quartz crucible, an alumina crucible, or a platinum crucible and roughly melted. The resulting mixture is then inserted into a platinum crucible, a platinum alloy crucible, or an iridium crucible, melted in the temperature range of 900°C to 1200°C for 2 to 10 hours, and stirred for homogenization to perform foam breaking, for example. Subsequently, the temperature is decreased to 850°C or lower and finishing stirring is performed to remove striae. The resulting product is poured into a mold and slowly cooled.

[Physical properties]

The optical glass of the present invention has a distinctive partial dispersion ratio ($\theta g, F$). Therefore, an optical glass that compensates for chromatic aberration with high precision can be obtained.

The partial dispersion ratio ($\theta g, F$) is preferably 0.520 or more, more preferably 0.522 or more, and further preferably 0.524 or more.

The partial dispersion ratio is preferably 0.560 or less, more preferably 0.558 or less, and further preferably 0.556 or less.

The partial dispersion ratio ($\theta g, F$) is a value measured in conformity with JOGIS01-2003, which is the standard of the Japan Optical Glass Manufacturers' Association.

Herein, the partial dispersion ratio ($\theta g, F$) and the anomalous dispersion ($\Delta \theta g, F$) will be described. Then, features of the optical glass of the present invention in terms of physical properties will be described in detail.

First, the partial dispersion ratio ($\theta$g,F) will be described.

In the wavelength dependence of refractive index, the partial dispersion ratio ($\theta$g,F) refers to a ratio of differences between refractive indices in two certain wavelength ranges and is represented by formula (1) below.

$$\theta g, F = (n_g - n_F)/(n_F - n_C) \cdots\cdots \text{formula (1)}$$

where $n_g$ represents a refractive index of g-line (435.83 nm), $n_F$ represents a refractive index of F-line (486.13 nm), and $n_C$ represents a refractive index of C-line (656.27 nm).

The relationship between the partial dispersion ratio ($\theta$g,F) and the Abbe number (vd) is plotted on an XY graph. In the case of typical optical glasses, the relationship is substantially plotted on a straight line called a normal line. The normal line refers to a straight line that extends diagonally upward to the right and that connects two points which are plots of the partial dispersion ratio and Abbe number of NSL7 and PBM2 on an XY graph (rectangular coordinates) with the vertical axis indicating the partial dispersion ratio ($\theta$g,F) and the horizontal axis indicating the Abbe number (vd) (refer to Fig. 1). The normal glasses used for reference of the normal line are different among optical glass manufacturers, but each manufacturer defines the normal line with substantially the same slope and intercept (NSL7 and PBM2 are optical glasses manufactured by OHARA Inc., the NSL7 has an Abbe number (vd) of 60.5 and a partial dispersion ratio ($\theta$g,F) of 0.5436, the PBM2 has an Abbe number (vd) of 36.3 and a partial dispersion ratio ($\theta$g,F) of 0.5828).

In relation to the partial dispersion ratio ($\theta$g,F), the anomalous dispersion ($\Delta\theta$g,F) indicates the degree that the plots of the partial dispersion ratio ($\theta$g,F) and the Abbe number (vd) deviate from the normal line in the vertical axis direction. An optical element formed of a glass having a high anomalous dispersion ($\Delta\theta$g,F) is capable of compensating for the chromatic aberration caused by other lenses at a wavelength near the blue wavelength range.

In the middle to low dispersion region (the region with an Abbe number of about 55 or more), the anomalous dispersion ($\Delta\theta$g,F) have tended to increase as the Abbe number (vd) increases. Furthermore, it has tended to be difficult to maintain the anomalous dispersion at a high level while the degree of abrasion is controlled to 420 or less.

As a result of thorough studies, the present inventors have succeeded in developing an optical glass that has a high anomalous dispersion ($\Delta\theta$g,F) with respect to the Abbe number (vd) and that has good workability.

The optical glass of the present invention has a high refractive index (nd) and a low dispersion (high Abbe number).

In the optical glass of the present invention, the refractive index (nd) is preferably 1.50 to 1.60. The refractive index (nd) is preferably 1.50 or more and more preferably 1.51 or more. The refractive index (nd) is preferably 1.59 or less and more preferably 1.58 or less.

In the optical glass of the present invention, the Abbe number (vd) is preferably 60 to 80. The Abbe number is preferably 62 or more, more preferably 64 or more, and further preferably 80 or more. The Abbe number is preferably 78 or less and more preferably 76 or less.

The refractive index (nd) and the Abbe number (vd) are values measured in conformity with JOGIS01-2003, which is the standard of the Japan Optical Glass Manufacturers' Association.

In the optical glass of the present invention, the degree of abrasion is particularly low and is preferably 420 or less. Therefore, the optical glass is not subjected to abrasion or formation of scratches unnecessarily, which makes it easy to handle the optical glass in a polishing process. Thus, the polishing process can be easily performed.

The degree of abrasion is more preferably 415 or less and further preferably 410 or less.

On the other hand, if the degree of abrasion is excessively low, it tends to be difficult to perform the polishing process. Therefore, the degree of abrasion is preferably 200 or more, more preferably 210 or more, and further preferably 220 or more.

The degree of abrasion is a value measured in conformity with "JOGIS10-1994 Method for measuring degree of abrasion of optical glass".

The optical glass of the present invention has a low temperature coefficient (dn/dT) of the relative refractive index.

More specifically, in the optical glass of the present invention, the upper limit of the temperature coefficient of the relative refractive index is preferably $+3.0 \times 10^{-6}$ °C$^{-1}$, more preferably $+2.0 \times 10^{-6}$ °C$^{-1}$, further preferably $+1.0 \times 10^{-6}$ °C$^{-1}$, and still further preferably $0 \times 10^{-6}$ °C$^{-1}$. The temperature coefficient is a value equal to the upper limit or a value lower than (negative side) the upper limit.

On the other hand, in the optical glass of the present invention, the lower limit of the temperature coefficient of the relative refractive index is preferably $-5.5 \times 10^{-6}$ °C$^{-1}$, more preferably $-4.5 \times 10^{-6}$ °C$^{-1}$, further preferably $-4.0 \times 10^{-6}$ °C$^{-1}$, still further preferably $-3.7 \times 10^{-6}$ °C$^{-1}$, and most preferably $-3.0 \times 10^{-6}$ °C$^{-1}$. The temperature coefficient is a value equal to the lower limit or a value higher than (positive side) the lower limit.

Almost no glass having a negative temperature coefficient of the relative refractive index is known. Such a glass extends the range of choices for correction of, for example, image formation misalignment due to temperature change. Furthermore, by using a glass having a small absolute value of the temperature coefficient of the relative refractive index, for example, image formation misalignment due to temperature change can be more easily corrected. Therefore, a glass having a temperature coefficient of the relative refractive index within the above range can contribute to the correction of, for example, image formation misalignment due to temperature change.

The temperature coefficient of the relative refractive index of the optical glass of the present invention is a temperature coefficient of a refractive index (589.3 nm) in the air at the same temperature as that of the optical glass. The temperature coefficient indicates the amount of change in relative refractive index per 1°C ($°C^{-1}$) obtained when the temperature is changed from 40°C to 60°C.

[Preform and Optical element]

The optical glass of the present invention is useful for various optical elements and optical designs. In particular, it is preferable to form a preform from the optical glass of the present invention and produce an optical element such as a lens, a prism, or a mirror by using means performed on the preform, such as polishing or precision press forming. Thus, when the optical glass is used for optical apparatuses, such as cameras or projectors, including optical elements through which visible light passes, high-definition and high-precision image formation properties can be achieved. The method for producing a preform material is not particularly limited. For example, a method for directly producing a preform material from molten glass can also be employed as described in a method for molding glass gob in Japanese Unexamined Patent Application Publication No. 8-319124 or a production method and a production apparatus for optical glass in Japanese Unexamined Patent Application Publication No. 8-73229. Alternatively, a method for producing a preform material by performing cold working such as grinding and polishing on a strip material formed from an optical glass can be employed.

Desired optical properties such as image formation properties are preferably achieved in a wider temperature range in the optical glass of the present invention because more preferable preforms and optical elements are obtained by using the optical glass.

Examples

Tables 1 to 7 show the composition (mol% expressed by cat.% or ani.%), the refractive index (nd), the Abbe number (vd), the partial dispersion ratio (θg,F), the anomalous dispersion (Δθg,F), and the degree of abrasion (Aa) of glasses in Examples 1 to 47, which are the optical glasses of the present invention.

The optical glasses in Examples 1 to 47 of the present invention were produced as follows. For each of the optical glasses, high-purity raw materials used for typical fluorophosphate glasses, such as oxides, carbonates, nitrates, fluorides, and metaphosphate compounds, were selected as raw materials for the corresponding components. The raw materials were weighed so as to have a composition ratio in each of Examples in Table 1, uniformly mixed with each other, and then inserted into a platinum crucible. The raw materials were melted in an electric furnace in the temperature range of 900°C to 1200°C for 2 to 10 hours in accordance with the degree of difficulty in melting of the glass composition and stirred for homogenization to perform foam breaking, for example. Subsequently, the temperature was decreased to 850°C or lower and the resulting product was poured into a mold and slowly cooled.

Herein, the refractive index (nd), the Abbe number (vd), and the partial dispersion ratio (θg,F) of the optical glasses in Examples 1 to 47 and Comparative Example 1 were measured in conformity with JOGIS01-2003, which is the standard of the Japan Optical Glass Manufacturers' Association. Note that the glasses used in this measurement were treated in a lehr at a slow cooling rate of -25°C/hr as an annealing condition. The anomalous dispersion (Δθg,F) was determined from the difference between the partial dispersion ratio (θg,F) on the normal line in Fig. 1 at the measured Abbe number (vd) and the measured partial dispersion ratio (θg,F).

The degree of abrasion was measured in conformity with "JOGIS10-1994 Method for measuring degree of abrasion of optical glass". Specifically, a glass square plate sample having a size of 30 × 30 × 10 mm was placed at a predetermined position 80 mm from the center of a cast flat tray (250 mmφ) horizontally rotating at 60 rpm. At a vertical load of 9.8 N (1 kgf), rubbing was performed while a polishing liquid prepared by adding 10 g of a #800 (average grain size 20 μm) lapping material (aluminous A abrasive grains) to 20 mL of water was uniformly supplied for five minutes. The mass of the sample before and after the lapping was measured to determine the abrasion mass. Similarly, the abrasion mass of a standard sample designated by the Japan Optical Glass Manufacturers' Association was also determined to calculate the degree of abrasion.

$$\text{Degree of abrasion} = \{(\text{Abrasion mass of sample/Specific gravity})/(\text{Abrasion mass of standard sample/Specific gravity})\} \times 100$$

The temperature coefficient (dn/dT) of the relative refractive index of each of the glasses in Examples was a temperature coefficient of the relative refractive index at 40°C to 60°C measured for light having a wavelength of 589.3 nm by interferometry described in "Method for measuring temperature coefficient of refractive index of optical glass" conforming to JOGIS18-1994, which is the standard of the Japan Optical Glass Manufacturers' Association.

Table 8 shows the temperature coefficient of the relative refractive index.

Table 9 shows the composition and physical properties of the glass in Comparative Example.

[Table 1]

|  | 1 | 2 | 3 | 4 | 5 | 6 | 7 |
|---|---|---|---|---|---|---|---|
| Cat.% |  |  |  |  |  |  |  |
| $P^{5+}$ | 32.06 | 32.06 | 32.06 | 35.97 | 34.74 | 34.08 | 34.08 |
| $Al^{3+}$ | 16.65 | 16.65 | 16.65 | 13.17 | 11.18 | 14.85 | 14.85 |
| $B^{3+}$ |  |  |  |  |  |  |  |
| $Mg^{2+}$ | 9.09 | 9.09 | 5.69 | 12.56 | 9.17 | 10.88 | 10.88 |
| $Ca^{2+}$ | 15.30 | 15.30 | 15.30 | 8.77 | 12.30 | 11.92 | 11.92 |
| $Sr^{2+}$ | 11.19 | 11.19 | 11.19 | 2.38 | 10.72 | 6.64 | 6.64 |
| $Ba^{2+}$ | 9.59 | 5.51 | 9.59 | 22.05 | 12.52 | 11.45 | 9.49 |
| $Y^{3+}$ |  |  |  |  |  |  |  |
| $Gd^{3+}$ |  |  |  | 1.27 | 3.95 | 0.66 | 0.66 |
| $Nb^{5+}$ |  |  |  |  |  |  |  |
| $Zn^{2+}$ | 6.11 | 10.19 | 9.51 | 3.83 | 5.43 | 9.51 | 11.48 |
| Total % | 100 | 100 | 100 | 100 | 100 | 100 | 100 |
| Ani.% |  |  |  |  |  |  |  |
| $O^{2-}$ | 52.99 | 52.99 | 52.97 | 63.77 | 58.50 | 58.46 | 58.46 |
| $F^-$ | 47.01 | 47.01 | 47.03 | 36.23 | 41.50 | 41.54 | 41.54 |
| Total % | 100 | 100 | 100 | 100 | 100 | 100 | 100 |
| nd | 1.535 | 1.534 | 1.537 | 1.561 | 1.557 | 1.548 | 1.549 |
| vd | 73.73 | 73.24 | 73.19 | 71.04 | 71.78 | 72.02 | 71.06 |
| $\Theta$g.f | 0.53 | 0.54 | 0.54 | 0.55 | 0.55 | 0.54 | 0.54 |
| Degree of abrasion | 351 | 341 | 362 | 391 | 351 | 341 | 331 |

[Table 2]

|  | 8 | 9 | 10 | 11 | 12 | 13 | 14 |
|---|---|---|---|---|---|---|---|
| Cat.% |  |  |  |  |  |  |  |
| $P^{5+}$ | 34.08 | 31.40 | 31.82 | 31.82 | 31.82 | 31.82 | 31.82 |
| $Al^{3+}$ | 14.85 | 14.24 | 14.43 | 14.43 | 14.43 | 14.43 | 14.43 |
| $B^{3+}$ |  |  |  |  |  |  |  |

(continued)

| | 8 | 9 | 10 | 11 | 12 | 13 | 14 |
|---|---|---|---|---|---|---|---|
| Cat.% | | | | | | | |
| $Mg^{2+}$ | 9.24 | 6.49 | 8.56 | 5.82 | 5.82 | 5.82 | 5.82 |
| $Ca^{2+}$ | 11.92 | 14.17 | 14.36 | 17.10 | 14.36 | 14.36 | 14.36 |
| $Sr^{2+}$ | 6.64 | 11.29 | 11.44 | 11.44 | 14.18 | 11.44 | 11.44 |
| $Ba^{2+}$ | 11.45 | 11.44 | 8.28 | 8.28 | 8.28 | 8.28 | 11.02 |
| $Y^{3+}$ | | | | | | 2.74 | |
| $Gd^{3+}$ | 0.66 | 2.11 | 2.14 | 2.14 | 2.14 | 2.14 | 2.14 |
| $Nb^{5+}$ | | | | | | | |
| $Zn^{2+}$ | 11.15 | 8.85 | 8.97 | 8.97 | 8.97 | 8.97 | 8.97 |
| Total % | 100 | 100 | 100 | 100 | 100 | 100 | 100 |
| Ani.% | | | | | | | |
| $O^{2-}$ | 58.46 | 52.98 | 52.67 | 52.67 | 52.67 | 51.97 | 54.74 |
| $F^{-}$ | 41.54 | 47.02 | 47.33 | 47.33 | 47.33 | 48.03 | 45.26 |
| Total % | 100 | 100 | 100 | 100 | 100 | 100 | 100 |
| nd | 1.546 | 1.549 | 1.540 | 1.543 | 1.542 | 1.546 | 1.547 |
| vd | 71.69 | 71.45 | 72.99 | 72.66 | 73.09 | 72.40 | 72.44 |
| $\Theta$g.f | 0.53 | 0.54 | 0.55 | 0.55 | 0.55 | 0.54 | 0.55 |
| Degree of abrasion | 395 | 381 | 346 | 353 | 383 | 351 | 391 |

[Table 3]

| | 15 | 16 | 17 | 18 | 19 | 20 | 21 |
|---|---|---|---|---|---|---|---|
| Cat.% | | | | | | | |
| $p^{5+}$ | 31.82 | 31.39 | 35.36 | 31.39 | 31.82 | 31.50 | 31.82 |
| $Al^{3+}$ | 14.43 | 14.24 | 13.68 | 14.24 | 14.43 | 14.29 | 14.43 |
| $B^{3+}$ | | 2.70 | | | | | |
| $Mg^{2+}$ | 5.82 | 5.74 | 5.52 | 5.74 | 8.56 | 5.76 | 5.82 |
| $Ca^{2+}$ | 14.36 | 14.16 | 13.61 | 14.16 | 14.36 | 14.21 | 14.36 |
| $Sr^{2+}$ | 11.44 | 11.28 | 10.85 | 11.28 | 11.44 | 11.32 | 11.44 |
| $Ba^{2+}$ | 8.28 | 9.52 | 10.45 | 9.52 | 8.28 | 9.89 | 8.28 |
| $Y^{3+}$ | | | | 2.70 | | | |
| $Gd^{3+}$ | 2.14 | 2.11 | 2.03 | 2.11 | 2.14 | 2.11 | 2.14 |
| $Nb^{5+}$ | | | | | | 2.03 | |
| $Zn^{2+}$ | 11.71 | 8.85 | 8.51 | 8.85 | 8.97 | 8.88 | 11.71 |
| Total % | 100 | 100 | 100 | 100 | 100 | 100 | 100 |
| Ani.% | | | | | | | |
| $O^{2-}$ | 52.67 | 53.38 | 57.62 | 54.31 | 54.74 | 54.36 | 54.74 |
| $F^{-}$ | 47.33 | 46.62 | 42.38 | 45.69 | 45.26 | 45.64 | 45.26 |

(continued)

| Ani.% | | | | | | | |
|---|---|---|---|---|---|---|---|
| Total % | 100 | 100 | 100 | 100 | 100 | 100 | 100 |
| nd | 1.544 | 1.550 | 1.553 | 1.549 | 1.540 | 1.555 | 1.546 |
| vd | 71.93 | 71.94 | 71.03 | 71.72 | 73.58 | 66.64 | 71.75 |
| Θg.f | 0.54 | 0.55 | 0.54 | 0.54 | 0.54 | 0.55 | 0.54 |
| Degree of abrasion | 365 | 354 | 401 | 340 | 335 | 331 | 384 |

[Table 4]

| | 22 | 23 | 24 | 25 | 26 | 27 | 28 |
|---|---|---|---|---|---|---|---|
| Cat.% | | | | | | | |
| $p^{5+}$ | 30.98 | 35.36 | 31.39 | 31.82 | 31.82 | 31.82 | 32.04 |
| $Al^{3+}$ | 14.05 | 13.68 | 14.24 | 14.43 | 14.43 | 14.43 | 10.40 |
| $B^{3+}$ | 5.33 | | | | | | 2.76 |
| $Mg^{2+}$ | 5.67 | 5.52 | 5.74 | 8.56 | 7.19 | 5.82 | 5.86 |
| $Ca^{2+}$ | 13.98 | 13.61 | 14.16 | 14.36 | 14.36 | 14.36 | 14.46 |
| $Sr^{2+}$ | 11.13 | 10.85 | 11.28 | 11.44 | 11.44 | 11.44 | 11.52 |
| $Ba^{2+}$ | 8.06 | 7.85 | 6.82 | 5.54 | 6.91 | 6.91 | 10.40 |
| $Y^{3+}$ | | | | | | | |
| $Gd^{3+}$ | 2.08 | 2.03 | 4.81 | 2.14 | 2.14 | 2.14 | 2.15 |
| $Nb^{5+}$ | | | | | | | |
| $Zn^{2+}$ | 8.73 | 11.10 | 11.55 | 11.71 | 11.71 | 13.08 | 10.41 |
| Total % | 100 | 100 | 100 | 100 | 100 | 100 | 100 |
| Ani.% | | | | | | | |
| $O^{2-}$ | 54.12 | 59.65 | 56.39 | 54.74 | 55.80 | 55.80 | 58.45 |
| $F^{-}$ | 45.88 | 40.35 | 43.61 | 45.26 | 44.20 | 44.20 | 41.55 |
| Total % | 100 | 100 | 100 | 100 | 100 | 100 | 100 |
| nd | 1.558 | 1.556 | 1.556 | 1.544 | 1.547 | 1.549 | 1.555 |
| vd | 70.93 | 70.45 | 70.63 | 71.80 | 71.57 | 70.88 | 70.58 |
| Θg.f | 0.55 | 0.54 | 0.54 | 0.54 | 0.54 | 0.54 | 0.54 |
| Degree of abrasion | 355 | 360 | 335 | 351 | 346 | 354 | 354 |

[Table 5]

| | 29 | 30 | 31 | 32 | 33 | 34 | 35 | 36 |
|---|---|---|---|---|---|---|---|---|
| Cat.% | | | | | | | | |
| $p^{5+}$ | 30.98 | 31.18 | 32.74 | 31.82 | 33.64 | 30.98 | 29.65 | 31.39 |
| $Al^{3+}$ | 14.05 | 14.14 | 14.24 | 14.43 | 14.05 | 14.05 | 14.39 | 14.24 |
| $B^{3+}$ | 5.33 | 4.02 | | | | 2.66 | 2.73 | 2.701 |
| $Mg^{2+}$ | 5.67 | 5.70 | 7.09 | 5.82 | 5.67 | 5.67 | 5.80 | 5.74 |

13

(continued)

|  | 29 | 30 | 31 | 32 | 33 | 34 | 35 | 36 |
|---|---|---|---|---|---|---|---|---|
| Cat.% |  |  |  |  |  |  |  |  |
| $Ca^{2+}$ | 13.98 | 14.07 | 14.16 | 15.73 | 15.31 | 13.98 | 13.27 | 14.16 |
| $Sr^{2+}$ | 11.13 | 11.21 | 11.28 | 11.44 | 11.13 | 11.13 | 11.40 | 11.29 |
| $Ba^{2+}$ | 6.73 | 7.44 | 6.82 | 5.54 | 5.39 | 6.73 | 8.25 | 8.17 |
| $Y^{3+}$ |  |  |  |  |  | 2.66 | 2.07 |  |
| $Gd^{3+}$ | 2.08 | 2.09 | 2.11 | 2.14 | 2.08 | 2.08 | 2.13 | 2.11 |
| $Nb^{5+}$ |  |  |  |  |  |  |  |  |
| $Zn^{2+}$ | 10.07 | 10.13 | 11.55 | 13.08 | 12.73 | 10.07 | 10.31 | 10.20 |
| Total % | 100 | 100 | 100 | 100 | 100 | 100 | 100 | 100 |
| Ani.% |  |  |  |  |  |  |  |  |
| $O^{2-}$ | 55.19 | 54.81 | 57.07 | 55.80 | 58.30 | 56.10 | 53.71 | 54.43 |
| $F^-$ | 44.81 | 45.19 | 42.93 | 44.20 | 41.70 | 43.90 | 46.29 | 45.57 |
| Total % | 100 | 100 | 100 | 100 | 100 | 100 | 100 | 100 |
| nd | 1.558 | 1.555 | 1.550 | 1.549 | 1.553 | 1.559 | 1.555 | 1.5522 |
| vd | 70.61 | 70.67 | 70.82 | 70.72 | 70.59 | 70.20 | 70.97 | 71.29 |
| $\Theta$g.f | 0.54 | 0.54 | 0.53 | 0.54 | 0.54 | 0.54 | 0.54 | 0.5425 |
| Degree of abrasion | 324 | 322 | 320 | 298 | 301 | 297 | 319 | 348 |

[Table 6]

|  | 37 | 38 | 39 | 40 | 41 | 42 | 43 | 44 |
|---|---|---|---|---|---|---|---|---|
| Cat.% |  |  |  |  |  |  |  |  |
| $P^{5+}$ | 33.43 | 33.87 | 29.25 | 29.45 | 29.65 | 29.65 | 29.65 | 31.39 |
| $Al^{3+}$ | 15.11 | 15.67 | 12.85 | 13.61 | 14.39 | 14.39 | 14.39 | 14.24 |
| $B^{3+}$ |  |  | 2.69 | 2.71 | 2.73 | 2.763 | 2.73 | 2.70 |
| $Mg^{2+}$ | 7.02 | 6.97 | 5.72 | 5.76 | 5.80 | 4.44 | 4.44 | 5.74 |
| $Ca^{2+}$ | 13.01 | 12.26 | 13.10 | 13.19 | 13.28 | 13.28 | 13.28 | 14.16 |
| $Sr^{2+}$ | 12.51 | 11.10 | 11.25 | 11.32 | 11.40 | 11.40 | 11.40 | 11.28 |
| $Ba^{2+}$ | 5.41 | 6.70 | 8.14 | 8.20 | 8.25 | 8.25 | 8.25 | 8.17 |
| $La^{3+}$ |  |  |  |  |  |  | 2.07 |  |
| $Y^{3+}$ |  |  | 4.74 | 2.06 | 2.07 | 2.07 |  |  |
| $Gd^{3+}$ | 2.09 | 2.07 | 2.10 | 3.47 | 2.13 | 2.13 | 2.13 | 2.11 |
| $Nb^{5+}$ |  |  |  |  |  |  |  |  |
| $Zn^{2+}$ | 11.44 | 11.36 | 10.17 | 10.24 | 10.31 | 11.67 | 11.67 | 10.20 |
| Total % | 100 | 100 | 100 | 100 | 100 | 100 | 100 | 100 |
| Ani.% |  |  |  |  |  |  |  |  |
| $O^{2-}$ | 57.72 | 58.14 | 56.70 | 55.68 | 55.71 | 55.71 | 55.71 | 56.40 |
| $F^-$ | 42.28 | 41.87 | 43.31 | 44.33 | 44.29 | 44.29 | 44.29 | 43.61 |

(continued)

| Ani.% | | | | | | | | |
|---|---|---|---|---|---|---|---|---|
| Total % | 100 | 100 | 100 | 100 | 100 | 100 | 100 | 100 |
| nd | 1.546 | 1.547 | 1.564 | 1.560 | 1.555 | 1.558 | 1.558 | 1.557 |
| vd | 71.62 | 71.77 | 69.59 | 70.11 | 71.40 | 70.09 | 70.42 | 71.05 |
| Θg.f | 0.54 | 0.55 | 0.5 | 0.54 | 0.55 | 0.54 | 0.54 | 0.55 |
| Degree of abrasion | 320 | 325 | 321 | 329 | 335 | 326 | 326 | 349 |

[Table 7]

| | 45 | 46 | 47 |
|---|---|---|---|
| Cat.% | | | |
| $P^{5+}$ | 31.40 | 31.40 | 35.17 |
| $Al^{3+}$ | 14.24 | 14.24 | 13.14 |
| $B^{3+}$ | 2.70 | 2.70 | 1.35 |
| $Mg^{2+}$ | 5.74 | 5.74 | 7.07 |
| $Ca^{2+}$ | 14.16 | 14.16 | 10.08 |
| $Sr^{2+}$ | 11.28 | 11.28 | 5.64 |
| $Ba^{2+}$ | 8.17 | 8.17 | 13.97 |
| $Y^{3+}$ | | | |
| $Gd^{3+}$ | 2.11 | 2.11 | 2.25 |
| $Nb^{5+}$ | | | |
| $W^{6+}$ | | | 0.90 |
| $Zn^{2+}$ | 10.20 | 10.20 | 10.43 |
| Total % | 100 | 100 | 100 |
| Ani.% | | | |
| $O^{2-}$ | 54.32 | 56.32 | 64.91 |
| $F^{-}$ | 45.69 | 45.69 | 35.09 |
| Total % | 100 | 100 | 100 |
| nd | 1.546 | 1.546 | 1.572 |
| vd | 71.44 | 71.44 | 66.80 |
| Θg.f | 0.54 | 0.54 | 0.55 |
| Degree of abrasion | 344 | 344 | 363 |

[Table 8]

| Example | 1 | 26 | 27 | 36 | 38 | 41 | 43 | 44 |
|---|---|---|---|---|---|---|---|---|
| dn/dt ($10^{-6}$ °$C^{-1}$) | -3.6 | -2.4 | -2.0 | -2.8 | -3.2 | -3.6 | -4.2 | -4.5 |

[Table 9]

|  | Comparative Example |
|---|---|
| Cat.% |  |
| $P^{5+}$ | 33.1 |
| $Al^{3+}$ | 12.1 |
| $Mg^{2+}$ | 6.2 |
| $Ca^{2+}$ | 3.3 |
| $Sr^{2+}$ | 6.6 |
| $Ba^{2+}$ | 29.9 |
| $Yb^{3+}$ | 2.2 |
| $Zn^{2+}$ | 6.6 |
| Total % | 100 |
| Ani.% |  |
| $O^{2-}$ | 64.1 |
| $F^-$ | 35.9 |
| Total % | 100 |
| nd | 1.5874 |
| vd | 68.26 |
| Degree of abrasion | 450 |
| dn/dt | -6.2 |

As shown in Tables 1 to 7, the optical glasses in Examples 1 to 47 of the present invention each had a refractive index (nd) of 1.50 to 1.60, an Abbe number (vd) of 60 to 80, and a θg.f value of 0.52 to 0.56. Furthermore, the optical glasses in Examples 1 to 47 of the present invention had a degree of abrasion of 420 or less and thus were glasses easily handled in a polishing process.

As is clear from Table 8, the optical glass of the present invention was an optical glass that could contribute to the correction of, for example, image formation misalignment due to temperature change in an optical system such as an onboard optical apparatus or a projector used in a high-temperature environment.

As shown in Table 9, the optical glass in Comparative Example had an excessively high $Ba^{2+}$ content. Therefore, the degree of abrasion was excessively high and the dn/dt value was outside the desired range in the present invention.

**Claims**

1. An optical glass comprising $P^{5+}$, $Al^{3+}$, and $Zn^{2+}$ as cation components and $O^{2-}$ and $F^-$ as anion components, wherein the cation components are $P^{5+}$ 25% to 40%, $Al^{3+}$ 5% to 20%, $Zn^{2+}$ 1% to 15%, and $Ba^{2+}$ 0% to 28% on a cat.% basis, the anion components are $O^{2-}$ 40% to 70% and $F^-$ 30% to 60% on an ani.% basis, and the optical glass has a refractive index (nd) of 1.53 to 1.60, an Abbe number (vd) of 65 to 75, and a degree of abrasion of 420 or less.

2. The optical glass according to Claim 1, wherein a temperature coefficient (40°C to 60°C) of a relative refractive index (589.3 nm) is in a range of $+2.0 \times 10^{-6}$ to $-5.5 \times 10^{-6}$ ($°C^{-1}$).

3. An optical element formed of the optical glass according to Claim 1 or 2.

## INTERNATIONAL SEARCH REPORT

| International application No. |
| --- |
| PCT/JP2018/015004 |

**A. CLASSIFICATION OF SUBJECT MATTER**
Int.Cl. C03C3/247(2006.01)i, G02B1/00(2006.01)i

According to International Patent Classification (IPC) or to both national classification and IPC

**B. FIELDS SEARCHED**

Minimum documentation searched (classification system followed by classification symbols)
Int.Cl. C03C3/247, G02B1/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-126603 A (OHARA, INC.) 05 July 2012, paragraphs [0001], [0006], [0013]-[0014], [0019]-[0020], [0041]-[0042], [0054]-[0056], [0063]-[0065], examples 4-5 (Family: none) | 1-3 |
| X | JP 2013-163632 A (OHARA, INC.) 22 August 2013, paragraphs [0001], [0008], [0012]-[0019], [0021]-[0022], [0043]-[0044], [0058]-[0062], [0074], examples 2, 7 & CN 102745898 A & TW 201247586 A | 1-3 |
| X | JP 06-157068 A (OHARA, INC.) 03 June 1994, paragraph [0001], example 7 (Family: none) | 1-3 |
| A | JP 2003-160356 A (HOYA CORPORATION) 03 June 2003, paragraphs [0001], [0014]-[0016], [0020]-[0021], [0024], [0029]-[0030], tables 1, 3 (Family: none) | 1-3 |

☐ Further documents are listed in the continuation of Box C.  ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 02 July 2018 (02.07.2018) | 17 July 2018 (17.07.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013163632 A
- JP 2015205785 A
- JP 8319124 A
- JP 8073229 A